# EUROPÄISCHE PATENTANMELDUNG

(11) **EP 0 887 148 A2**
(43) Veröffentlichungstag der Anmeldung: **30.12.1998**
(21) Anmeldenummer: 98111436.6
(22) Anmeldetag: 22.06.1998
(51) Int. Cl.: B23Q 3/155

(54) **Linearer Werkzeugwechsler**

(30) Priorität: 23.06.1997 DE 19726664
(71) Anmelder: System 3R International AB, 162 50 Vällingby (SE)
(72) Erfinder: Nordquist, Hakon, 187 75 Täby (SE)
(74) Vertreter: Zinngrebe, Horst, Dr.rer.nat.

(57) **Zusammenfassung**

Beschrieben wird ein Werkzeugwechsler mit mehreren in wenigstens einer horizontalen Reihe gleich beabstandeten Speicherplätzen für je einen Werkzeughalter, wobei jeder Speicherplatz am freien Ende eines Armes ausgebildet ist, der quer zur Richtung der Reihe um eine vorgegebene Distanz horizontal beweglich ist, mit einem mit einer Steuereinrichtung gekoppelten Antrieb für die Bewegung jeweils mindestens eines der Arme innerhalb eines vorgegebenen, sich parallel zur Reihe erstreckenden Längenabschnitts, der beispielsweise durch die Länge des Arbeitsbereichs einer Werkzeugmaschinen-Pinole bestimmt ist. Damit Mittel geschaffen werden, die eine Erhöhung der Anzahl auswechselbarer Werkzeuge erlauben, ist vorgesehen, daß jeder Arm der Reihe mit einem Schlitten gekoppelt ist, der parallel zur Reihe beweglich und an einem mit der Steuereinrichtung verbundenen Schlittentrieb befestigt ist.

## Beschreibung

Die Erfindung betrifft einen Werkzeugwechsler mit mehreren in Wenigstens einer Reihe gleich beabstandeten Speicherplätzen für je einen Werkzeughalter, wobei jeder Speicherplatz am freien Ende eines Armes ausgebildet ist, der quer zur Richtung der Reihe um eine vorgegebene Distanz beweglich ist, mit einem mit einer Steuereinrichtung gekoppelten Antrieb für die Bewegung jeweils mindestens eines der Arme innerhalb eines vorgegebenen sich parallel zur Reihe erstreckenden Längenabschnitts, der beispielsweise durch die Länge des Arbeitsbereichs einer Werkzeugmaschinen-Pinole bestimmt ist.

Die Pinole beispielsweise Von Elektroerodiermaschinen ist innerhalb eines Arbeitsbereichs durch die Steuereinrichtung der Maschine verfahrbar, der eine definierte horizontale Langsausdehnung hat. Im Arbeitsbetrieb sitzt an der Pinole ein Erodierwerkzeug, auch Elektrode genannt, welches gewöhnlich über einen Werkzeughalter an das Futter der Pinole herangeführt und angespannt wird.

Zur Herstellung einer bestimmten Konfiguration in einem Werkstück mittels Elektroerosion sind mehrere Elektroden erforderlich, mit denen die Pinole nacheinander zu bestimmten Zeitpunkten bestückt werden muß. Bei automatisch arbeitenden Maschinen dient zur Bereitstellung der für die Konfiguration benötigten Elektroden ein Werkzeugwechsler der eingangs genannten Art. an dessen Speicherplätzen die einzelnen Elektroden bis zu ihrem Einsatz bevorratet sind.

Zum Wechseln eines Werkzeugs (Elektrode) läßt die Steuereinrichtung zunächst einen leeren Arm, auf dem sich keine Elektrode befindet, in den Arbeitsbereich der Pinole vorfahren, woraufhin die Pinole über den leeren Speicherplatz fährt und ein am Arm etwa vorgesehener Greifer die nicht mehr benötigte Elektrode mit zugehörigem Werkzeughalter aus der Pinole entnimmt. Ein weiterer Arm, in dessen Speicherplatz sich die jetzt benötigte Elektrode (mit Werkzeughalter) befindet, fährt in den Arbeitsbereich vor, damit die Pinole sich das neue Werkzeug aus diesem Speicherplatz entnehmen kann.

Für relativ einfache Maschinen der erwähnten Art genügt ein Werkzeugwechsler, dessen Speicherplätze horizontal längs einer Reihe gleich beabstandet angeordnet sind. Die Anzahl der auf die beschriebene Weise auswechselbaren Werkzeuge ist jedoch begrenzt.

Der Erfindung liegt daher die Aufgabe zugrunde, Mittel zu schaffen, die eine Erhöhung der Anzahl auswechselbarer Werkzeuge erlauben.

Erfindungsgemäß ist dazu vorgesehen, daß jeder Arm der Reihe mit einem Schlitten gekoppelt ist, der parallel zur Reihe beweglich und an einem mit der Steuereinrichtung verbundenen Schlittentrieb befestigt ist. Dadurch wird es möglich, auch außerhalb des Pinolen-Arbeitsbereichs Arme mit Speicherplätzen vorzusehen, weil diese nach entsprechender Aktivierung des Schlittentriebes bei Bedarf in den Arbeitsbereich der Pinole gelangen können. Die Anzahl der für die Pinole wirksam bevorratbaren Elektroden wird dadurch stark erhöht, sie ist nur durch die Konstruktion des Schlittens und die vorhandenen Platzverhältnisse begrenzt.

Zweckmäßig sind alle Arme der Reihe parallel zueinander auf einem mit dem Schlitten verbundenen Balken befestigt. Der Schlittentrieb kann ein elektrisch gesteuerter Ketten- oder Spindeltrieb oder auch eine pneumatisch oder hydraulisch arbeitende Kolben-Zylindereinheit sein. In bevorzugter Ausgestaltung der Erfindung ist an den gegenüberliegenden Endpunkten der Schlittenbahn je ein vom Schlitten betätigbarer Endschalter zur Bewegungsumsteuerung des Schlittens vorgesehen. Weiterhin empfiehlt es sich, die Steuereinrichtung derart auszulegen, daß dann, wenn die Pinole eine Endposition ihres Arbeitsbereichs erreicht, der Schlitten zur Bewegung um den Langenabschnitt veranlaßt wird. Eine besonders einfache Ausgestaltung der Erfindung ergibt sich, wenn an den Endpositionen des Arbeitsbereichs der Pinole je ein im Strom- oder Mediumkreis des Schlittentriebs liegender Schalter angeordnet ist, der eine Bewegung des Schlittens um einen Längenabschnitt veranlaßt. Damit wird erreicht, daß die Pinole durch Gegenfahren gegen den Schalter sich ein Werkstück, das auf einem in Längsrichtung außerhalb des Arbeitsbereichs befindlichen Arm bevorratet ist, selbsttätig heranholen kann.

Der Werkzeugwechsler ist zweckmäßig an einer solchen Eletroerosionsmaschine befestigt, die durch Aussenden elektrischer Signale an elektrisch steuerbare Ventile die Bewegungen des Wechslers steuert. Die Stellungen der Pneumatikzylinder sind dann durch den Status der Ventile bestimmt. Das Maschinenprogramm legt fest, welche Gruppe von Magazinpositionen während der Maschinenarbeitszeit im Maschinenarbeitsbereich zur Verfügung stehen muß. Die Gruppe von Magazinpositionen kann jederzeit durch das Maschinenprogramm zugänglich gemacht werden.

Bevorzugte Ausgestaltungen der Erfindung sind im übrigen in den Unteransprüchen angegeben.

Nachfolgend wird die Erfindung anhand eines Ausführungsbeispieles unter Bezugnahme auf die beigefügte Zeichnung näher beschrieben. Es zeigen:
FIG. 1: eine schematische Draufsicht auf einen mit den Merkmalen der Erfindung ausgerüsteten Wekzeugwechsler,
FIG. 2: eine schematische Seitenansicht des Wechslers nach Fig. 1,
FIG. 3: eine schematische Stirnansicht des Wechslers nach Fig. 1,
FIG. 4 und 5: schematische Darstellungen zweier Betriebszustände des Wechslers nach Fig. 1 mit zugehörigem Arbeitsbereich einer Pinole, und
FIG. 6: eine schematische Darstellung einer für den Wechsler nach Fig. 1 geeigneten Steuereinrichtung.

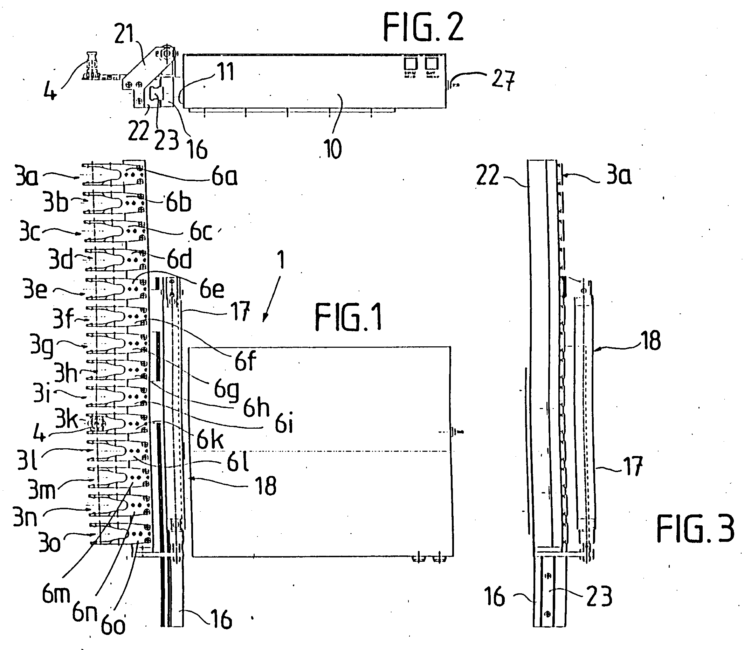

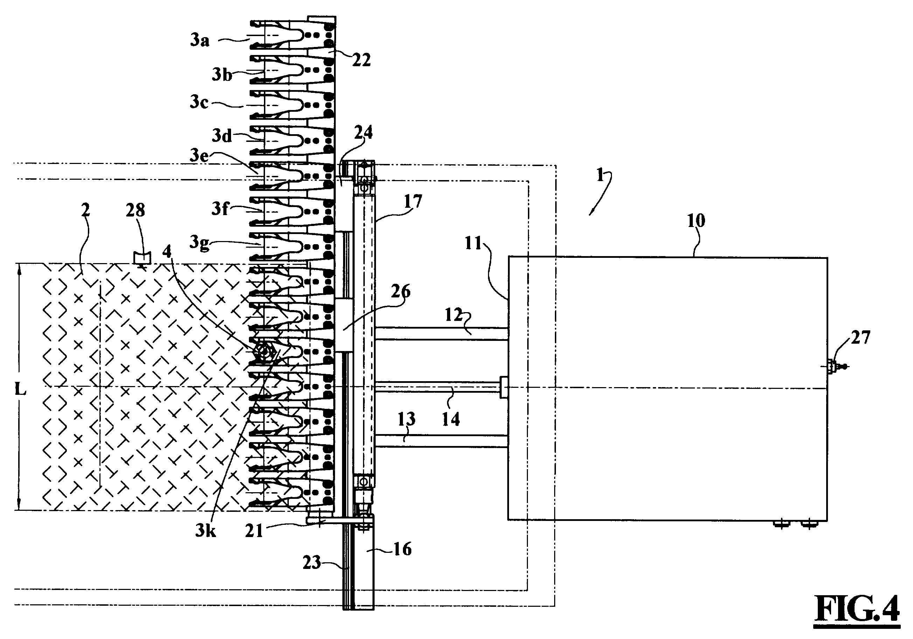

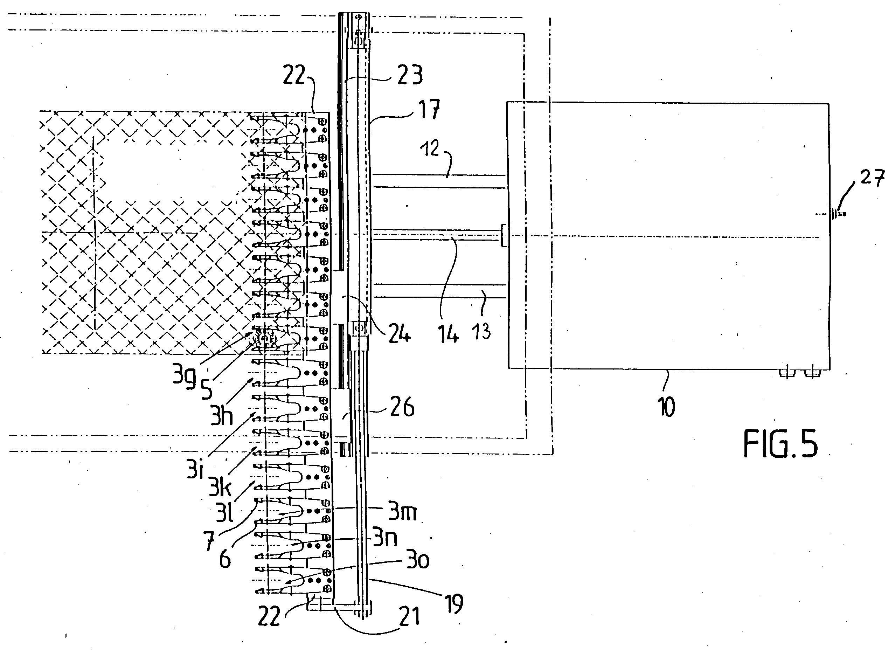

Der Werkzeugwechsler 1 ist neben dem Arbeitsbereich 2 einer Pinole einer im einzelnen nicht dargestellten Senkerodiermaschine angeordnet und besitzt eine Vielzahl von im dargestellten Beispiel vierzehn Speicherplätzen 3a bis 3o. Einige Speicherplätze können leer sein, in anderen ist je eine Elektrode mit an ihr befestigtem Elektrodenhalter 4 bevorratet. So enthält gemäß Fig. 1 und 4 der Speicherplatz 3k den Elektrodenhalter 4 mit nicht dargestellter Elektrode und gemäß Fig. 5 der Speicherplatz 3g den Elektrodenhalter 5. Ein Beispiel eines Elektrodenhalters mit schaftförmigem Zugbolzen ist in der Europäischen Patentschrift 255042 (= US 4,855,558) dargestellt und beschrieben. Ein schaftartiger Teil des Elektrodenhalters weist an seiner Peripherie gegenüberliegende Abflachungen auf, an denen er von einem Greifer seitlich erfaßt und transportiert werden kann. Es ist jedoch auch möglich, daß in einem oder mehreren der Speicherplätze 3a bis 3o nur eine Elektrode beherbergt ist, die mit seitlichen Eingriffsflächen für den Greifer versehen ist.

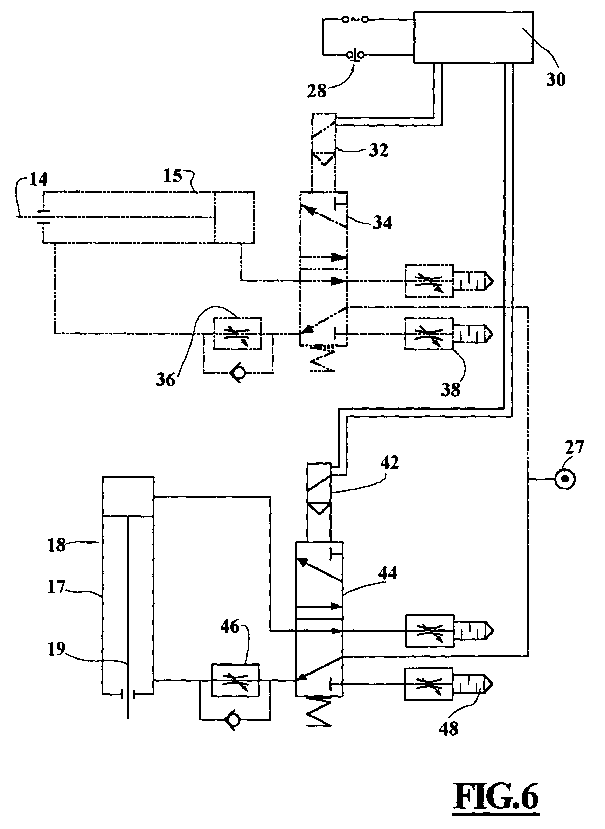

In dem kastenförmigen Gehäuse 10 des Werkzeugwechslers 1 sind eine nicht dargestellte Steuereinrichtung für den mit den Bewegungen der Pinole synchronen Betrieb sowie die für diesen erforderlichen mechanischen und elektronischen Mittel untergebracht. Zu diesen Mitteln gehört gemäß Figur 6 ein Antrieb für eine Vorschub- oder Rückzugsbewegung von mit den Speicherplätzen 3a bis 3o versehenen Armen 6a bis 6o, der einen pneumatisch angetriebenen, in einem Zylinder 15 geführten und aus einer Seitenfläche 11 des Gehäuses 10 vorstehenden Stempel 14 umfaßt.

An der freien sich außerhalb des Gehäuses 10 befindenden Stirnfläche des Stempels 14 ist ein massiver Querholm 16 befestigt, welcher zwei jeweils zum Stempel 14 parallele und sich in das Gehäuse 10 erstreckende Führungen 12, 13 aufweist und auf welchem ein Schlittentrieb 18 montiert ist.

Der Schlittentrieb 18 umfaßt eine pneumatisch betätigbare Kolben-Zylindereinheit, deren Zylinder 17 auf dem Querholm 16 in einer Richtung befestigt ist, die senkrecht zu der Vorschub- oder Rückzugsbewegung der Arme weist. An dem freien Ende des Kolbens 19 des Schlittentriebs 18 ist eine massive Lasche 21 befestigt, die mit einem Ende eines Längsbalkens 22 verschraubt ist. Der Längsbalken 22 erstreckt sich parallel zum Zylinder 17 und damit auch parallel zu und vor dem Querholm 16. Aus der dem Längsbalken 22 gegenüberliegenden Vorderseite des Querholms 16 steht eine sich horizontal und senkrecht zur Bewegungsrichtung der Arme erstreckende Führungsschiene 23 mit Schwalbenschwanzprofil vor, welches von zwei in Längsrichtung beabstandeten, an dem Längsbalken 22 befestigten Führungsbacken 24, 26 umgriffen ist. Damit bilden der Längsbalken 22 mit den Führungsbacken 24, 26 einen senkrecht zur Bewegungsrichtung der Arme 6a bis 6o und horizontal verfahrbaren Schlitten, der vom Schlittentrieb 18 angetrieben ist.

Auf der Oberseite des Längsbalkens 22 ist eine Reihe von im dargestellten Beispiel vierzehn Armen 6a bis 6o montiert, wobei jeder Arm an seinem freien, über den Längsbalken 22 vorstehenden Ende zwei in horizontaler Ebene einander gegenüberliegende und bewegliche Greifer aufweist, so daß zwischen dem Greiferpaar jedes Armes je ein Speicherplatz 3a bis 3o definiert ist. Zur besseren Übersichtlichkeit der Darstellung sind in der Figur 5 die Greifer 6 und 7 eines Greiferpaares nur am Speicherplatz 3m eingetragen. Die Speicherplätze der Reihe sind linear und exakt horizontal sowie senkrecht zur Bewegungsrichtung der Arme 6a bis 6o angeordnet.

Wie insbesondere Figur 4 erkennen laßt, hat der Arbeitsbereich 2 der Senkerodiermaschinenpinole im horizontalen Querschnitt eine Länge L senkrecht zur Bewegungsrichtung der Arme 6a bis 6o. Befindet sich der Kolben 19 am inneren Totpunkt seiner Bewegungsmöglichkeit im Zylinder 17 und ist der Stempel 14 ganz ausgefahren, befinden sich die Speicherplätze 3a bis 3g außerhalb und die Speicherplätze 3h bis 3o innerhalb des Arbeitsbereichs 2. Die Speicherplätze 3h bis 3o sind daher für die Pinole zur Ablage und/oder Aufnahme eines Werkzeugs, hier üblicherweise eines Elektrodenhalters 4 (am Speicherplatz 3k) zugänglich. Dagegen vermag die Pinole die Speicherplätze 3a bis 3g zunächst nicht zu erreichen.

Für den Zugriff auf die Speicherplätze 3a bis 3g muß die Pinole gegen einen Schalter 28 anfahren, der bei der Darstellung in Figur 4 am oberen Rand des Arbeitsbereichs 2 angeordnet ist. Dieser Schalter kann ein in den Pneumatikkreis für den Zylinder 17 eingeschaltetes Ventil aufsteuern mit der Folge, daß das Innere des Zylinders mit Druckluft beaufschlagt wird und der Kolben 19 von seiner inneren Totpunktstellung gemäß Figur 4 in seine äußere Totpunktstellung gemäß Figur 5 ausfahrt. Dadurch wird der Schlitten 22, 24, 26 so verschoben, daß die Speicherplätze 3h bis 3o aus dem Arbeitsbereich 2 heraus und die Speicherplätze 3a bis 3g in den Arbeitsbereich 2 hineingelangen und damit für die Pinole zugänglich werden.

In dem beschriebenen Ausführungsbeispiel verdoppelt also die Erfindung die Anzahl der für die Pinole verfügbaren Speicherplätze.

Im Zuge des Betriebs der Senkerodiermaschine kann im Programm der Befehl auftreten, beispielsweise das Erodieren mit dem Werkzeug 4 zu beenden und mit dem Werkzeug 5 weiterzuarbeiten. Das Programm enthalte die Anweisung, Werkzeug 4 am Speicherplatz 3k abzulegen und das Werkzeug 5 vom Speicherplatz 3g aufzunehmen. Die Steuereinrichtung 30 (Fig. 6) stellt daraufhin fest, daß ein Werkzeugwechsel auszuführen ist und gibt daher an die Magnetspule 32 des dem Zylinder 15 zugeordneten Ventils 34 ein Stellsignal, so daß das Ventil 34 in die andere der beiden in Figur 6 gestrichelt dargestellten Arbeitspositionen übergeht. Aus einer nicht dargestellten, an den Nippel 27 angeschlossenen Druckluftquelle wird daher der Innenraum des Zylinders 15 mit Druckluft beaufschlagt mit gleichzeitiger Entlüftung des Kolbenraumes über ein Drosselventil 36 und eine Abblasöffnung 38 hinter dem Ventil 34, sodaß der Kolben 14 mit Querholm 16 in die in den Figuren 4 und 5 dargestellte Werkzeugwechselposition ausfährt. Dabei ergreift der dem Speicherplatz 3k zugeordnete Greifer das Werkzeug 4 und entnimmt es auf an sich bekannte Weise (beispielsweise durch Hochfahren der Pinole) von der Pinole. Das Werkzeug 4 ist dann am Speicherplatz 3k abgesetzt.

Während oder nach dem Absetzen des Werkzeugs 4 am Speicherplatz 3k stellt die Steuerung 30 ferner fest, daß der Speicherplatz 3g, an welchem sich das neue Werkzeug 5 befindet, derzeit im Arbeitsbereich 2 nicht erreichbar ist. Die Steuerung 30 veranlaßt daher die Pinole, gegen den Schalter 28 anzufahren. welcher bei hinreichender Annäherung der Pinole schließt und die Steuerung veranlaßt, an die Magnetspule 42 eines weiteren, dem Schlittentrieb 18 zugeordneten Ventils 44 ein Stellsignal abzugeben, welches daraufhin die andere der beiden dargestellten Arbeitspositionen einnimmt, in welcher der Zylinderraum des Zylinders 17 mit Druckluft aus der Druckluftquelle beaufschlagt und der Kolbenraum über ein Drosselventil 46 und ein dem Ventil 44 nachgeschaltetes Abblasventil 48 entlüftet wird. Der Kolben 19 fährt daher aus dem Zylinder 17 in seine äußere Totpunktstellung aus mit der Folge, daß die Speicherplätze 3h bis 3o aus dem Arbeitsbereich 2 heraus und die Speicherplätze 3a bis 3g in den Arbeitsbereich 2 hineingefahren werden, wie das Figur 5 zeigt. Damit kann die Pinole das Werkzeug 5 ergreifen und der Wechselvorgang durch Umsteuern des Ventils 34 und daraufhin erfolgendes Einziehen des Stempels 14 abgeschlossen werden.

## Patentansprüche

1. Werkzeugwechsler (1) mit mehreren in wenigstens einer horizontalen Reihe gleich beabstandeten Speicherplätzen (3a-3o) für je einen Werkzeughalter (4, 5), wobei jeder Speicherplatz am freien Ende eines Armes (6a-6o) ausgebildet ist, der quer zur Richtung der Reihe um eine vorgegebene Distanz horizontal beweglich ist, mit einem mit einer Steuereinrichtung gekoppelten Antrieb für die Bewegung jeweils mindestens eines der Arme innerhalb eines vorgegebenen, sich parallel zur Reihe erstreckenden Längenabschnitts (L), der beispielsweise durch die Länge des Arbeitsbereichs (2) einer Werzeugmaschinen-Pinole bestimmt ist, dadurch gekennzeichnet, daß jeder Arm der Reihe mit einem Schlitten (22, 24, 26) gekoppelt ist, der parallel zur Reihe beweglich und an einem mit der Steuereinrichtung verbundenen Schlittentrieb (18) befestigt ist.

2. Vorrichtung nach Anspruch 1, dadurch gekennzeichnet daß alle Arme (6a-6o) der Reihe parallel zueinander auf einem mit dem Schlitten verbundenen Balken (22) befestigt sind.

3. Vorrichtung nach einem der Ansprüche 1 oder 2, dadurch gekennzeichnet, daß der Schlittentrieb (18) eine pneumatisch oder hydraulisch arbeitende Kolben-Zylindereinheit (17, 19) ist.

4. Vorrichtung nach einem der Ansprüche 1 oder 2, dadurch gekennzeichnet, daß der Schlittentrieb ein elektrisch gesteuerter Ketten- oder Spindeltrieb ist.

5. Vorrichtung nach einem der vorstehenden Ansprüche, dadurch gekennzeichnet, daß an den gegenüberliegenden Endpunkten der Schlittenbahn je ein vom Schlitten betätigter Endschalter zur Bewegungsumsteuerung des Schlittens vorgesehen ist.

6. Vorrichtung nach einem der vorstehenden Ansprüche, dadurch gekennzeichnet, daß die Steuereinrichtung derart ausgelegt ist, daß dann, wenn die Pinole eine Endposition ihres Arbeitsbereichs (2) erreicht, der Schlitten zur (22, 24, 26) Bewegung um einen Längenabschnitt (L) veranlaßt wird.

7. Vorrichtung nach einem der vorstehenden Ansprüche, dadurch gekennzeichnet, daß an den Endpositionen des Arbeitsbereichs der Pinole je ein im Strom- oder Mediumkreis des Schlittentriebs liegender Schalter angeordnet ist, der eine Bewegung des Schlittens um einen Längenabschnitt (L) veranlaßt.
